(19) Europäisches Patentamt
European Patent Office
Office européen des brevets

(11) **EP 3 825 954 A1**

(12) **EUROPEAN PATENT APPLICATION**
published in accordance with Art. 153(4) EPC

(43) Date of publication:
**26.05.2021 Bulletin 2021/21**

(51) Int Cl.:
*G06T 3/00* (2006.01)    *G06T 7/00* (2017.01)

(21) Application number: **18926664.6**

(22) Date of filing: **18.07.2018**

(86) International application number:
**PCT/CN2018/096180**

(87) International publication number:
**WO 2020/014909 (23.01.2020 Gazette 2020/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(71) Applicant: **SZ DJI Technology Co., Ltd.
Shenzhen, Guangdong 518057 (CN)**

(72) Inventors:
• **ZHOU, You
Shenzhen, Guangdong 518057 (CN)**
• **LIU, Jie
Shenzhen, Guangdong 518057 (CN)**
• **YAN, Jiaqi
Shenzhen, Guangdong 518057 (CN)**

(74) Representative: **Goddar, Heinz J.
Boehmert & Boehmert
Anwaltspartnerschaft mbB
Pettenkoferstrasse 22
80336 München (DE)**

(54) **PHOTOGRAPHING METHOD AND DEVICE AND UNMANNED AERIAL VEHICLE**

(57)    The present disclosure provides an imaging method and device, and an unmanned aerial vehicle (UVA). The method includes building a 3D model of a target based on vision technology, the 3D model including 2D information of the target at different angles and 3D information corresponding to each piece of 2D information; controlling the UAV to move around the target; acquiring real-time images captured by an imaging module on the UAV; and adjusting a flight trajectory of the UAV and/or an imaging direction of the imaging module based on the real-time images, the 2D information of the target at different angles, and the 3D information corresponding to each piece of 2D information. By using the vision technology to obtain the 3D model of the target, in the process of the UAV moving around the target, even if only the local information of the target is captured, the current attitude relationship between the UAV and the target can be determined based on the 3D model. As such, the flight trajectory of the UAV and/or the imaging direction of the imaging module 300 can be automatically adjusted, and the composition of the UAV is more professional.

```
┌─────────────────────────────────────┐
│ Build a 3D model of a target based   │
│ on vision technology, the 3D model   │──── S101
│ including 2D information of the       │
│ target at different angles and 3D    │
│ information corresponding to each     │
│ piece of 2D information               │
└─────────────────────────────────────┘
                  │
┌─────────────────────────────────────┐
│                                       │──── S102
│ Control the UAV to move around the    │
│ target                                │
└─────────────────────────────────────┘
                  │
┌─────────────────────────────────────┐
│ Acquire real-time images captured by  │──── S103
│ an imaging module on the UAV          │
└─────────────────────────────────────┘
                  │
┌─────────────────────────────────────┐
│ Adjust a flight trajectory of the     │
│ UAV and/or an imaging direction of    │
│ the imaging module based on the       │──── S104
│ real-time images, the 2D              │
│ information of the target at          │
│ different angles, and the 3D          │
│ information corresponding to each      │
│ piece of 2D information               │
└─────────────────────────────────────┘
```

**FIG. 1**

**Description**

**TECHNICAL FIELD**

The present disclosure relates to the field of imaging and, more specifically, to an imaging method and device, and an unmanned aerial vehicle (UVA).

**BACKGROUND**

An orbit shot is a commonly used shooting technique in aerial photography composition. During the shooting, the UAV will make a circular movement around a "point of interest" and can shoot the target at will during the process. In order to realize the orbit shot, not only the UAV needs to be controlled to circle around the target, but the heading of the UAV and the pitch angle of the gimbal also need to be adjusted to achieve better composition. Advanced operating skills are needed when a single operator needs to complete this type of shooting.

In order to enable a single operator to complete the orbit shot, an autonomous "point of interest" function based on GPS management has been created, which can be referred to as POI. POI requires the operator to have more advanced operating skills. While completing the trajectory change of the UAV, the operator also needs to operate orientation of the imaging module on the UAV to ensure smooth and stable shooting. The conventional automatic POI generally uses GPS information. Due to the deviation of the GPS, the composition of the shot cannot be guaranteed (e.g., placing the target in the center of the composition), and in places with poor GPS signals (e.g., between buildings), GPS-based POI cannot be used. Another technical solution is to automatically track and orbit around the target based on visual, which is generally used for small targets that are easy to see the whole picture, but for relatively large targets, the effect is relatively poor. This is because the UAV can only see a part of the target when it orbits a relatively large target, and cannot observe the whole picture of the target at any time, as such, the limitation on the orbit shot of the target is strong.

**SUMMARY**

The present disclosure provides an imaging method and device, and an UVA.

More specifically, the present disclosure is achieved through the following technical solutions.

According to a first aspect of the present disclosure, an imaging method applied to a UAV is provided. The method includes building a 3D model of a target based on vision technology, the 3D model including 2D information of the target at different angles and 3D information corresponding to each piece of 2D information; controlling the UAV to move around the target; acquiring real-time images captured by an imaging module on the UAV; and adjusting a flight trajectory of the UAV and/or an imaging direction of the imaging module based on the real-time images, the 2D information of the target at different angles, and the 3D information corresponding to each piece of 2D information.

According to a second aspect of the present disclosure, an imaging device applied to a UAV is provided. The device includes a storage device storing program instructions; a processor; and an imaging module electrically connected to the processor. The processor is configured to call the program instructions that, when executed by the processor, causes the processor to: build a 3D model of a target based on vision technology, the 3D model including 2D information of the target at different angles and 3D information corresponding to each piece of 2D information; acquire real-time images captured by the imaging module following the UAV moving around the target; and adjusting a flight trajectory of the UAV and/or an imaging direction of the imaging module based on the real-time images, the 2D information of the target at different angles, and the 3D information corresponding to each piece of 2D information.

According to a third aspect of the present disclosure, a UAV is provided. The UAV includes a body, the body carrying an imaging module; a power assembly for driving the body to move; and a processor disposed in the body, the processor being electrically connected to the power assembly. The processor is configured to: build a 3D model of a target based on vision technology, the 3D model including 2D information of the target at different angles and 3D information corresponding to each piece of 2D information; control the UAV to move around the target; acquire real-time images captured by the imaging module carried on the UAV; and adjusting a flight trajectory of the UAV and/or an imaging direction of the imaging module based on the real-time images, the 2D information of the target at different angles, and the 3D information corresponding to each piece of 2D information.

It can be seen from the technical solutions provided by the above embodiments of the present disclosure that by obtaining the 3D model of the target through vision technology, in the process of the UAV moving around the target (especially moving around the target at a close range), even if only the local information of the target is captured, the current attitude relationship between the UAV and the target can be determined based on the 3D model. As such, the flight trajectory of the UAV and/or the imaging direction of the imaging module 300 can be automatically adjusted based on the determined current attitude relationship between the UAV and the target. Therefore, the composition of the UAV is more professional, and the imaging method and device of the present disclosure are particular suitable for close-range imaging of large targets.

## BRIEF DESCRIPTION OF THE DRAWINGS

In order to illustrate the technical solutions in accordance with the embodiments of the present disclosure more clearly, the accompanying drawings to be used for describing the embodiments are introduced briefly in the following. It is apparent that the accompanying drawings in the following description are only some embodiments of the present disclosure. Persons of ordinary skill in the art can obtain other accompanying drawings in accordance with the accompanying drawings without any creative efforts.

FIG. 1 is a flowchart of an imaging method according to an embodiment of the present disclosure.

FIG. 2 is an application scenario of the imaging method according to an embodiment of the present disclosure.

FIG. 3 is a flowchart of a specific implementation method of the imaging method according to an embodiment of the present disclosure.

FIG. 4 is a schematic diagram of an interface of a terminal device according to an embodiment of the present disclosure.

FIG. 5 is a flowchart of another specific implementation method of the imaging method according to an embodiment of the present disclosure.

FIG. 6 is a flowchart of yet another specific implementation method of the imaging method according to an embodiment of the present disclosure.

FIG. 7 is a schematic diagram of a feature point tracking algorithm acquiring feature points according to an embodiment of the present disclosure.

FIG. 8 is a flowchart of still another specific implementation method of the imaging method according to an embodiment of the present disclosure.

FIG. 9 is a structural block diagram of an imaging device according to an embodiment of the present disclosure.

FIG. 10 is a structural block diagram of a UAV according to an embodiment of the present disclosure.

## DETAILED DESCRIPTION OF THE EMBODIMENTS

Technical solutions of the present disclosure will be described in detail with reference to the drawings. It will be appreciated that the described embodiments represent some, rather than all, of the embodiments of the present disclosure. Other embodiments conceived or derived by those having ordinary skills in the art based on the described embodiments without inventive efforts should fall within the scope of the present disclosure.

The imaging method and device, and the UAV of the present disclosure will be described in detail below with reference to the accompanying drawings. In the case of no conflict, the following embodiments and features in the embodiments may be combined.

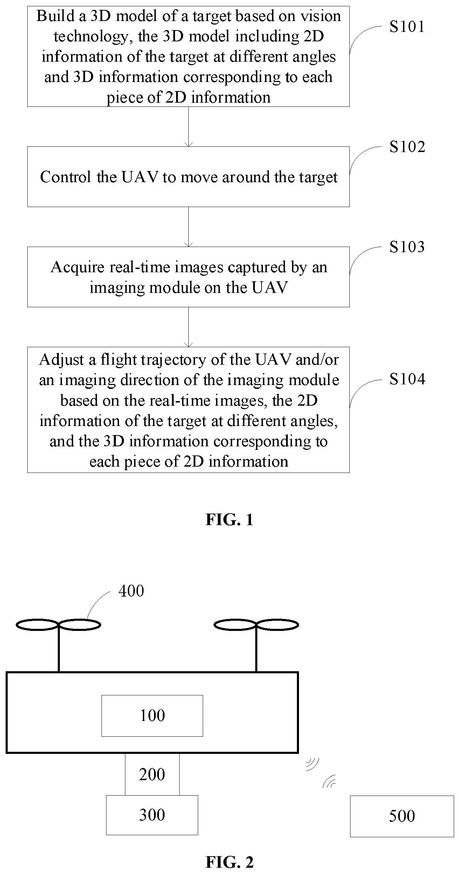

FIG. 1 is a flowchart of an imaging method according to an embodiment of the present disclosure. The imaging method of the embodiment can be applied to an unmanned aircraft, such as a UAV. Take the application of the imaging method being applied to a UAV as an example for further explanation. Referring to FIG. 2, the UAV includes a flight controller 100, a gimbal 200, and an imaging module 300, where the imaging module 300 is being carried on the body of the UAV through the gimbal 200.

The gimbal 200 can be a single-axis gimbal or a double-axis gimbal, or it can also be a three-axis gimbal or a four-axis gimbal. The imaging module 300 of this embodiment is not limited to a camera in the traditional sense. More specifically, the imaging module 300 may be an image capturing device or an imaging device (such as a camera, a camcorder, an infrared imaging device, an ultraviolet imaging device or the like), an audio capturing device (such as a parabolic reflection microphone), an infrared imaging device, etc. The imaging module 300 can provide static sensing data (such as images) or dynamic sensing data (such as videos).

The gimbal 200 may be in communication connection with the flight controller 100, for example, based on a controller area network (CAN) bus or other communication connections. The flight controller 100 can control the rotation of the gimbal 200 to control the rotation of the imaging module 300 carried on the gimbal 200. In addition, in some embodiments, the imaging module 300 may be communicatively connected with the flight controller 100. For example, the imaging module 300 may be directly communicatively connected to the flight controller 100, or the imaging module 300 may be communicatively connected to the flight controller 100 through the gimbal 200. The flight controller 100 can control the work of the imaging module 300 and obtain the captured images from the imaging module 300, etc.

In this embodiment, the UAV can include a power assembly 400. The power assembly 400 may include one or more rotating bodies, propellers, blades, motors, electronic speed controllers, etc. For example, the rotating body of the power assembly 400 may be a self-tightening rotating body, a rotating body assembly, or other rotating body power units. The UAV may include one or more power assemblies 400. All power assemblies 400 may be the same type. In some embodiments, the one or more power assemblies 400 may be of different types. The power assembly 400 can be mounted on the UVA by suitable means, such as a supporting element (such as a drive shaft). The power assembly 400 can be mounted at any suitable position of the UAV, such as the top, bottom, front, rear, side, or any combination thereof. The flight of the UAV can be controlled by controlling one or more power assemblies 400.

In some embodiments, the UAV may be in communication with a terminal 500 (for example, the flight controller 100 may be in communication with the terminal 500). The terminal 500 can provide control data to one or more of the UAV, the gimbal 200, and the imaging module 300, and receive information from one or more of the UAV, the gimbal 200, the payload imaging module 300 (such as the position and/or movement information of the UAV, the gimbal 200, or the imaging module 300, the image data captured by the imaging module 300).

The following embodiment will describe the imaging method in detail. As shown in FIG. 1, the imaging method may include the following steps.

S101, building a three-dimensional (3D) model of a target based on vision technology.

The target of this embodiment refers to object with relatively larger size, such as buildings, mountains, rivers, seas, etc. Further, the 3D model of this embodiment may include complete two-dimensional (2D) information and complete 3D information, and may also include partial 2D information and partial complete 3D information. In this embodiment, in order to speed up the 3D modeling of the target, the 3D model may include a part of the 2D information and a part of the 3D information, thereby obtaining a rough 3D model of the target. More specifically, the 3D model may include 2D information of the target at different angles and 3D information corresponding to each piece of 2D information.

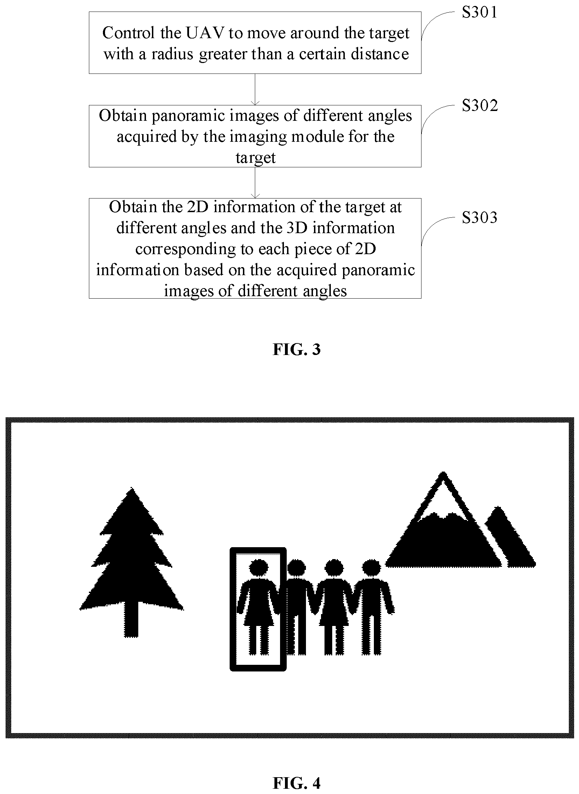

Referring to FIG. 3, the process of establishing a 3D model of the target can include, but is not limited to, the following steps.

S301, controlling the UAV to move around the target with a radius greater than a certain distance.

The specific distance in this embodiment refers to the distance from the UAV to the target, for example, the distance from the center of the UAV to the center of the target. The specific distance needs to satisfy that the imaging module 300 on the UAV can capture a panoramic view of the target, but the specific distance should not be too long. This is because if the specific distance is too long, the target in the captured panoramic view may be too small, and the amount of information extracted from the target may be limited, which is difficult for rapid modeling. In some embodiments, the specific distance may be 400 meters, 500 meters, 500 meters, 700 meters, 800 meters, etc. During the flight of the UAV, the length of the specific distance can be unchanged or changed, and the specific distance can be selected as needed. For example, in one of the embodiments, during the flight of the UAV, the length of the specific distance may be a constant value. In this case, the UAV moves in a circle around the target. In another embodiment, during the flight of the UAV, the length of the specific distance changes, for example, the UAV may make an elliptical orbiting movement around the target.

S302, obtaining panoramic images of different angles acquired by the imaging module 300 for the target.

In particular, the process at S302 is performed after the process at S301.

In this embodiment, different angles may be multiple angles on the same flight plane while the UAV flies around the target with a radius greater than a certain distance, it may also be the angle on different flight planes while the UAV flies around the target with a radius greater than a certain distance.

In this embodiment, the imaging module 300 may acquire panoramic images of the same target at different times, thereby obtaining panoramic images of different angles. More specifically, after determining the flight path, operating speed, and imaging interval of the UAV, the UAV can fly based on the determined flight path and operating speed, for example, orbiting a building. Subsequently, the UAV can control the imaging module 300 on it to acquire the panoramic images of the target based on the specific imaging interval. In this embodiment, the flight path and the operating speed may be preset by the user, or they can be the default flight path and operating speed. In this embodiment, the imaging interval may be as needed. For example, the imaging interval may be 2s, and the imaging module 300 may capture a panoramic image of the target every 2s. Further, in this embodiment, the UAV may record the imaging time t1, t2, t3... of each panoramic image, where t1, t2, t3... are arranged in the order of the imaging time of each panoramic image. It should be noted that in the present embodiment, the process at S302 may be performed at the same time that the imaging module 300 acquires the panoramic images at different angles for the same target, or it may be performed after the imaging module 300 acquires the panoramic images at different angles for the same target.

S303, obtaining the 2D information of the target at different angles and the 3D information corresponding to each piece of 2D information based on the acquired panoramic images of different angles.

The 2D information may include the 2D coordinates (pixel coordinates) of each feature point (features extraction) on the panoramic image, and the 3D information may include the 2D coordinates and depth information of each feature point on the panoramic image. The pixel coordinates of the feature points may be characterized in the form of feature descriptors, and the pixel coordinates of the feature points may also be other description forms that can characterize the relationship between scaling, direction changes, illumination changes, and distortions among various panoramic images. In this embodiment, since the feature descriptor has good adaptability to scaling, direction changes, illumination changes, distortions, etc., the feature descriptor can be used to characterize the pixel coordinates of the feature point. More specifically, the feature point can obtain the feature descriptor through feature description. Further, the feature descriptor can be characterized by feature vectors.

The process at S303 may include, but is not limited to, the following steps.

(1) Extracting the feature descriptor of the corresponding feature point from each panoramic image.

More specifically, scale-invariant feature transform (SIFT), speeded up robust features (SURF), or gradient location-orientation histogram (GLOH) may be used to obtain the feature descriptors of the feature point of each panoramic image from each panoramic image. In this embodiment, since the SIFT feature descriptor has good adaptability to scaling, direction changes, illumination changes, and slight affine distortion, SIFT can be used to obtain feature descriptors of the feature points of each panoramic image from each panoramic image.

In this embodiment, in order to reduce the processing complexity, the panoramic image may need to be preprocessed. More specifically, before extracting the feature descriptor of the corresponding feature point from each panoramic image, first, the target to be tracked sent by a terminal device may be received, and then the target box corresponding to the target in each panoramic image may be determined based on the received target. More specifically, the panoramic image taken by the imaging module 300 can be displayed in real time on the terminal device (such as a smart phone, a tablet, or a pair of smart glasses). Referring to FIG. 4, the user can click on the target to be tracked on the terminal device. The user can select the target to be tracked in the form of a frame, and the terminal device can send the target to be tracked to the UAV. Subsequently, the UAV can obtain the target box corresponding to the target in each panoramic image obtained at the process of S302 based on the received the target to be tracked, thereby obtaining the approximate position of the target in each panoramic image.

In order to further accelerate the processing speed, after determining the target box corresponding to the target in each panoramic image based on the received target, and before extracting the feature descriptor of the corresponding feature point from each panoramic image, it may be needed to perform a super-pixel segmentation processing on the target box corresponding to the target in each of the determined panoramic images to obtain the corresponding pixel block. At least one of the simple linear iterative clustering (SLIC), graph-based image segmentation, normalized cuts and image segmentation (NCut), turbopixel, quick-shaft, graph-cut a, and graph-cut b can be used to perform the super-pixel segmentation processing on the target box corresponding to the determined target in each panoramic image. In this embodiment, after obtaining the corresponding pixel block, SIFT, SURF, or GLOH may be used to obtain the feature descriptors of the feature points corresponding to each panoramic image from the pixel block corresponding to each panoramic image.

The process of the user framing the target to be tracked is not a very precise operation, and each pixel block may need to be fine-tuned to improve the accuracy of the target box. More specifically, after performing the super-pixel segmentation processing on the target box corresponding to the target in each of the determined panoramic images and obtaining the corresponding pixel block, the boundary pixels of the pixel blocks corresponding to each panoramic image may be adjusted. In one embodiment, when proportion of the pixel area of a boundary pixel in the corresponding target box is greater than or equal to a predetermined threshold, the boundary pixel may be determined to be a part of the pixel block. When the proportion of the pixel area of a boundary pixel in the corresponding target box is less than the predetermined threshold, the boundary pixel may be determined to be not a part of the pixel block. The predetermined threshold may be selected as 50%, 60%, 65%, 70%, etc., and the predetermined threshold may be adjusted as needed.

(2) Determining the 3D coordinates of each feature point and the attitude relationship between the panoramic images at different angles based on the feature descriptors of the feature point of each panoramic image.

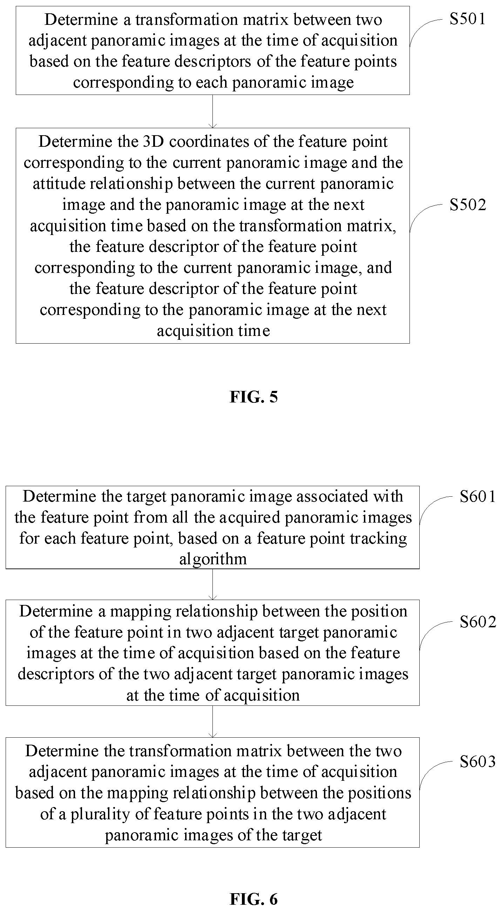

More specifically, referring to FIG. 5, determining the 3D coordinates of each feature point and the attitude relationship between the panoramic images at different angles based on the feature descriptors of the feature point of each panoramic image may include, but is not limited to, the following steps.

S501, determining a transformation matrix between two adjacent panoramic images at the time of acquisition based on the feature descriptors of the feature points corresponding to each panoramic image.

S502, determining the 3D coordinates of the feature point corresponding to the current panoramic image and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time. In this embodiment, the panoramic image at the next acquisition time may refer to the panoramic image that is after the acquisition time of the current panoramic image and is adjacent to the acquisition time of the current panoramic image.

Referring to FIG. 6, the process at S501 may include, but is not limit to, the following steps.

S601, determining the target panoramic image associated with the feature point from all the acquired panoramic images for each feature point, based on a feature point tracking algorithm.

The process at S601 uses a feature point tracking algorithm to track feature points between panoramic images at different times in order to calculate the image feature optical flow (movement) of each feature point.

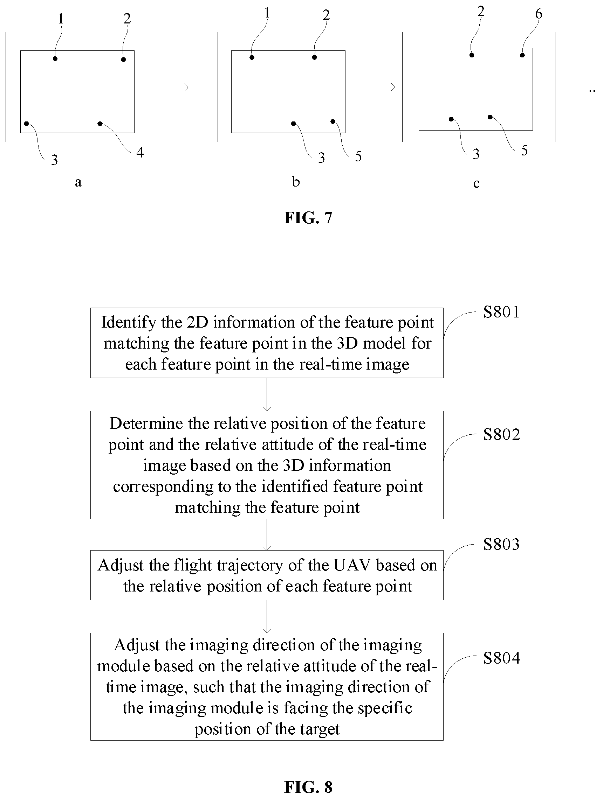

In this embodiment, the feature point tracking algorithm may be a Kanade-Lucas-Tomasi feature tracker (KLT), but it is not limited thereto. Referring to FIG. 7, which is the target box obtained at the process at S302. For example, a panoramic image a includes four feature points 1, 2, 3, and 4 (far more than four in practice). A panoramic image b is obtained during the flight of the UAV orbiting the target. Feature point 4 in the panoramic image a is no longer in the field of view of the panoramic image b, but feature points 1, 2, and 3 are still in the panoramic image a. A panoramic image c is obtained during the flight of the UAV orbiting the target. Feature point 1 in the panoramic image is no longer in the field of view of the panoramic image c, but feature points 2 and 3 are still in the panoramic image b. In this embodiment, for feature point 1, the target panoramic image includes panoramic image a and panoramic image b; for feature point 2, the target panoramic image includes panoramic image a, panoramic image b, and panoramic image c; for feature point 3, the target panoramic image includes panoramic image a, panoramic image b, and panoramic image c; and for feature point 4, the target panoramic image includes panoramic image a. Of course, the positions of the feature points 1, 2, and 3 in the panoramic image a in the panoramic image b, and the positions of the feature points 2 and 4 in the panoramic image b in the panoramic image c may all be calculated by the KLT algorithm.

In addition, after the process at S601, the process of building the 3D model of the target may further include determining an offset between the position of the feature point in the current target panoramic image and the position of the feature point in the previous time adjacent to the current target panoramic image (displacement between two images) for the determined target panoramic image of the feature point based on the feature point tracking algorithm; determining whether the position information (the position information of the feature points may be determined based on the feature descriptor of the feature point) of the feature points associated with the current target panoramic image is accurate in the current target panoramic image based on the offset; and determining whether the motion trajectory of each feature point is accurate. More specifically, determining whether the position information of the feature points associated with the current target panoramic image is accurate in the current target panoramic image based on the offset may include, for the determined target panoramic image, determining a first offset of the feature point from the position in the target panoramic image at the previous time to the position in the current target panoramic image based on the feature point tracking algorithm; for the determined target panoramic image of the feature point, determining a second offset of the feature point from the position in the current target panoramic image to the position in the target panoramic image at the previous time based on the feature point tracking algorithm; and determining whether the position information of the feature point in the current target panoramic image is accurate based on the first offset and the second offset.

In a specific embodiment, h is set as the offset between the two adjacent target panoramic images, and the two target panoramic images are F(x) and G(x) = F(x+h), where F(x) is the current panoramic image of the target, G(x) is the previous panoramic image of the target, the acquisition time of F(x) and G(x) are adjacent, and the acquisition time of F(x) is after the acquisition time of G(x). For each feature point included in F(x), the offset h of each feature point in the two adjacent target panoramic images by iterating the Formula (1) below.

$$\begin{cases} h_0 = 0 \\ h_{k+1} = h_k + \dfrac{\sum_x w(x)F'(x+h_k)[G(x) - F(x+h_k)]}{\sum_x w(x)F'(x+h_k)^2} \end{cases} \qquad (1)$$

In Formula (1), ho is the offset of the panoramic image where each feature point first appears, and $h_{K+1}$ is the offset of the feature points included in the $k^{th}$ target panoramic image between the $k^{th}$ target panoramic image and the k-$1^{th}$ target panoramic image, w(x) is the window function, and x is the feature point.

In this embodiment, the subsequent target panoramic image may be set as F(x), the previous target panoramic image may be set as G(x), and the first offset h of the position of a certain feature point in the subsequent target panoramic image relative to the position in the previous panoramic image may be calculated. Conversely, the second offset h' of the position of the feature point in the previous target panoramic image relative to the position in the subsequent target panoramic image may be calculated. Theoretically, h = -h'. If this condition is met, it means that the position information of the feature point in the current target panoramic image G(x) is accurate. In fact, in this embodiment, when |h-h'| is within an allowable error range, the position information of the feature point in the current target panoramic image may be considered as accurate. If |h-h'| is outside of the allowable error range, the position information of the feature point in the current target panoramic image may be considered as inaccurate, and re-tracking may be needed to determine the accurate position information of the feature point in the current target panoramic image.

S602, determining a mapping relationship between the position of the feature point in two adjacent target panoramic images at the time of acquisition based on the feature descriptors of the two adjacent target panoramic images at the time of acquisition.

The process at S602 may specifically include determining a liner mapping relationship of the position of the feature point in two adjacent target panoramic images at the time of acquisition based on the position information of the feature point in the two adjacent target panoramic images at the time of acquisition. In this embodiment, a Homography Matrix (that is, a projective linear transformation) may be used to characterize the linear mapping relationship between the position of the feature point in the two adjacent target panoramic images at the time of acquisition.

S603, determining the transformation matrix between the two adjacent panoramic images at the time of acquisition based on the mapping relationship between the positions of a plurality of feature points in the two adjacent panoramic images of the target.

In the previous step, referring to FIG. 7, based on the result of the KLT, the accurate positions of feature points 1, 2, and 3 in the panoramic image b can be obtained, and then based on the positions of the feature descriptors 1, 2, and 3 in the panoramic image a and the panoramic image b, the transformation matrix $H_{ab}$ between the panoramic image b and the panoramic image a can be calculated.

For example, in the panoramic image a, the position of the feature point 1 may be pa, and in the panoramic image b, the position of the feature point 1 may be pb, where

$$p_a = \begin{bmatrix} x_a \\ y_a \\ 1 \end{bmatrix}, \qquad p_b' = \begin{bmatrix} w'x_b \\ w'y_b \\ w' \end{bmatrix}, \quad \text{and}$$

$$H_{ab} = \begin{bmatrix} h_{11} & h_{12} & h_{13} \\ h_{21} & h_{22} & h_{23} \\ h_{31} & h_{32} & h_{33} \end{bmatrix}.$$

Then $p_b' = H_{ab} p_a$, where $H_{ba} = H_{ab}^{-1}$ and $p_b = p_b' / w' = \begin{bmatrix} x_b \\ y_b \\ 1 \end{bmatrix}.$

In this embodiment, the Hab can be normalized and divided the whole by $h_{33}$. As such, Hab includes eight unknown numbers that need at least four feature points to solve.

In addition, after the process at S603 and before the process at S502, the target box corresponding to the target in the current panoramic image may be updated based on the transformation matrix between the current panoramic image and the panoramic image at the last acquisition time. For example, the target box in the panoramic image b may be updated to obtain a new target box based on the transformation matrix $H_{ab}$ between the panoramic image b and the panoramic image a in FIG. 7 and the feature points in the panoramic image a.

Further, after updating the target box corresponding to the target in the current panoramic image based on the transformation matrix between the current panoramic image and the previous panoramic image, before the process at S502, SIFT, SURF, or GLOH may be used to extract feature descriptors of new feature points from the updated target box of the current panoramic image. For example, feature point 5 in the panoramic image b is a newly added feature point in the updated target box (the newly added feature point does not exist int eh target box of the previous panoramic image), and SIFT, SURF, or GLOH may be used to extract the feature descriptor of the feature point 5. The feature point 4 in the panoramic image a is not observed in the panoramic image b, then it is removed. For the panoramic image c, the steps from panoramic image a to panoramic image b may be repeated to remove the unobserved feature point 1 and add the new feature point 6.

Of course, in actual use, at least four points are needed to calculate the transformation matrix between two adjacent panoramic images. The previous embodiment are merely examples to illustrate the update process. In the actual process, each panoramic image will not only extract three feature points. Generally, dozens or hundreds of feature points can be extract for each panoramic image. In this embodiment, the number of the panoramic images, the number of the feature points, etc. can be adjusted as needed.

The process at S502 may specifically include using the bundle adjustment algorithm to estimate the 3D coordinates of the feature points corresponding to the current panoramic image, and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time.

The model of a general imaging module 300 is as follows.

$$z_c \begin{bmatrix} u \\ v \\ 1 \end{bmatrix} = K[R \quad T] \begin{bmatrix} x_w \\ y_w \\ z_w \\ 1 \end{bmatrix} \tag{2}$$

where $[u,v,1]^T$ represents the 2D points in the homogeneous image coordinates (the camera coordinate system); $[x_w,y_w,z_w,1]^T$ represents the 3D points in the world coordinates (the world coordinate system, including X-axis, Y-axis, and Z-axis); and the matrix K is referred to as the camera calibration matrix, which is the intrinsic parameters of each imaging module 300.

$$K = \begin{bmatrix} \alpha_x & \gamma & \mu_0 \\ 0 & \alpha_y & v_0 \\ 0 & 0 & 1 \end{bmatrix},$$

For a finite projective camera, the intrinsic matrix K includes five intrinsic parameters.

where $\alpha_x = fm_x$, $\alpha_y = fm_y$, f is the focal length of the imaging module 300, $m_x$ and $m_y$ are the number of pixels per unit distance in the X-axis and Y-axis directions, respectively, $\gamma$ is the distortion parameter between the X-axis and the Y-axis (for example, when the imaging module 300 is a CCD camera, the pixels are not squares), $\mu_0$ and $v_0$ are the position of the optical center, R (rotation) is the rotation transformation relationship between the two images acquired by the imaging module 300 at two adjacent times (that is, the rotation transformation matrix), and T (translation) is the displacement transformation relationship between two images acquired at two adjacent times. R and T may be the extrinsic parameters (extrinsic matrix) of the imaging module 300, which can express the rotation and displacement transformation (transform) from the world coordinate system tot eh camera coordinate system in the 3D space.

In this embodiment, the attitude relationship may include the rotation transformation relationship R and the translation transformation relationship T between two adjacent panoramic images. The formula for the bundle adjustment algorithm is as follows.

$$\min_{a_j,b_i} \sum_{i=1}^{n} \sum_{j=1}^{m} v_{ij} d(Q(a_j,b_i), x_{ij})^2 \tag{3}$$

In Formula (3), n number of 3D points are in m number of views (n number of 3D points can be tracked continuous on m continuously acquired panoramic images). For $v_{ij}$, if the feature point i is mapped on the jth panoramic image (image j), then $v_{ij} = 1$, otherwise $v_{ij} = 0$. $a_j$ is the parameter of each image j, including R and T, and the intrinsic parameter K of the imaging module (here the panoramic images are the continuously acquired panoramic images of the same imaging module 300, therefore, K remain unchanged). Each 3D point is represented by $b_i$, and the projection of the $i^{th}$ point on the $j^{th}$ panoramic image is $x_{ij}$. For $Q(a_j,b_i)$, when point I is on image j, the predicted projection can be calculated through $a_j$. Vector $x_{ij}$ is the real projection of the $i^{th}$ feature point on the jth panoramic image (image j). $d(x,y)$ is the Euclidean distance between vector x and vector y.

For the above steps, the feature points tracked by KLT may use the bundle adjustment algorithm to calculate the relative position of each 3D point (without scale), that is, $b_i$, and the attitude relationship of each panoramic image, that is, $a_j$.

In order to reduce the number of iterations, speed up the convergence time of the bundle adjustment algorithm, and reduce the probability of errors, in addition, before using the bundle adjustment algorithm to estimate the 3D coordinates of the feature points corresponding to the current panoramic image, and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time, the attitude relationship between adjacent panoramic images may be obtained through the vision module (such as visual odometry (VO) or visual inertial odometry (VIO)) and inertial measurement unit (IMU) on the UAV, or the navigation system (such as GPS, Beidou, etc.) and the IMU on the UAV, or the vision module, the navigation system, and the IMU on the UAV. Using the bundle adjustment algorithm to estimate the 3D coordinates of the feature points corresponding to the current panoramic image, and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time may specifically include using the attitude relationship as the initial value of the bundle adjustment; and estimating the 3D coordinates of the feature points corresponding to the current panoramic image, and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time. In this embodiment, first, the vision module and the IMU on the UAV, the navigation system and the IMU on the UAV, or the vision module, the IMU, the navigation system, and the IMU on the UAV may be used to provide a rough attitude relationship between the two panoramic images. The rough attitude relationship may be used as the initial value of the bundle adjustment algorithm and substitute it into the calculation to reduce the number of iterations, speed up the algorithm convergence time, and reduce the probability of error.

In addition, ii should be noted that the 3D coordinates of the feature points corresponding to the current panoramic image and the estimation of the attitude relationship between the current panoramic image and the panoramic image at the next acquisition time may also use other algorithms, which is not limited to the bundle adjustment algorithm of this embodiment.

At this point, the center position of the target can be determined, and the result obtained based on the bundle adjustment algorithm is based on the position of the first panoramic image as the origin of the coordinates. Subsequently, it is needed to convert all the feature descriptors of the feature points obtained by the overall modelling to the coordinate system with the center of the target as the starting coordinate, thereby obtaining the 3D model of the target (stored in the form of feature descriptors and feature vectors).

During the subsequent flight of the UAV around the target, the feature vector of the current image can be compared with the feature vector in the 3D model to obtain the relative position and complete the adjustment of the orientation and the shooting of the imaging module 300 to ensure the shooting is facing a specific position (such as the center position) of the target. The flight trajectory of the UAV can be corrected in real time by position planning and feedback, thereby completing the entire flight process more accurately and smoothly. For details, reference can be made to the processes at S102 and S103.

S102, controlling the UAV to move around the target.

In the process at S102, the UAV can move around the target. For example, the UAV can move around the target in a circle, and the UAV can also move around the target in an elliptical or other shape.

When the UAV moves around the target at a long distance, the UAV can quickly determine its relative position to the target based on the image captured by the imaging module 300, thereby controlling the flight trajectory of the UAV and the orientation of the imaging module 300. When the UAV moves around the target at a close range, the UAV cannot determine its relative position to the target based on the image captured by the imaging module 300. Therefore, the flight trajectory of the UAV and the orientation of the imaging module 300 cannot be adjusted at any time to obtain a more appropriate composition. Therefore, in this embodiment, compared to the UAV moving around the target in the process at S101, the distance that the UAV moves around the target in the process at S102 may be shorter, and the imaging module 300 may capture a partial image of the target.

S103, obtaining real-time images captured by the imaging module 300 on the UAV.

In the process at S103, real-time images from different angles captured by the imaging module 300 for the same target can be obtained, and the panoramic images captured by the imaging module 300 for the same target at different times can also be obtained. The specific principle is similar to the process at S302, which will not be repeated here.

S104, adjusting the flight trajectory of the UAV and/or the imaging direction of the imaging module 300 based on the real-time images, the 2D information of the target at different angles, and the 3D information corresponding to each piece of 2D information.

Before the process at S104, SIFT, SURF, or GLOH may be used to extract the feature descriptors of the feature points corresponding to the real-time images from the real-time images. The process of extracting the feature descriptors of the feature points corresponding to the real-time images is similar to the process of extracting the feature descriptors of the feature points in the panoramic image in the process at S303, which will not be repeated here. It should be noted that in the process at S104, the algorithm used to extract the feature descriptors of the feature points corresponding to the real-time images may need to be consistent with the algorithm used in the process at S303 to extract the feature descriptors of the feature points in the panoramic image.

Referring to FIG. 8, the process at S104 may include, but is not limited to, the following steps.

S801, identifying the 2D information of the feature point matching the feature point in the 3D model for each feature point in the real-time image.

In this process, the 2D information may be presented in the form of feature vectors. More specifically, the feature vector of each feature point may be compared with all feature vectors in the 3D model to obtain the feature vector closest to the feature point in the 3D model, thereby determining the 2D information of the feature point matching the feature point in the 3D model. More specifically, for each feature point in the real-time image, the 2D information of the feature point closest to the feature point in the 3D model may be identified. If the 2D information of the best matching feature point is being identified, a closest feature point in the 3D model can be found. However, whether feature point and the closest feature are mismatched may need to be further determined. For example, a database includes numbers 1,5, 11, 17, and 25. Given a number of 1.2, then the closest number is 1, and it is considered that 1.2 matches 1. However, if the given number is 1000, the closest number can be found in the databased as 25, but obviously 25 is very different from 1000, and it cannot be counted as a match. In this embodiment, in order to avoid mismatches, a determination needs to be made. The specific process may be as follows.

(1) For each feature point in the real-time image, determining the 2D information of the feature point closest to the feature point in the 3D model, and the 2D information of the feature point second closest to the feature point in the 3D model.

(2) Determining whether the closest feature point matched by the feature point matches accurately based on the distance $d_{closest}$ from the feature point to the closet feature point matched by the feature point and the distance $d_{second\ closest}$ from the feature point to the second closest feature point matched by the feature point. More specifically, $d_{closest}$ is calculated based on the 2D information of the feature point and the 2D information of the closest feature point matched by the feature point, and $d_{second\ closest}$ is calculated based on the 2D information of the feature point and the 2D information of the second closest feature point matched by the feature point. The calculation method of $d_{closest}$ and $d_{second\ closest}$ is similar to the calculation method of the distance between two coordinate points in conventional 2D coordinate system, which will not be repeated here.

In the process at S801 when the ratio between the $d_{closest}$ and $d_{second\ closest}$ is greater than a ratio threshold $T_d$ (that is, when Formula (4) in the following embodiment is satisfied), the closest feature point matched by the feature point is determined to be an accurate match; otherwise, it is a matching error.

$$\frac{d_{closest}}{d_{second\ closest}} > T_d \tag{4}$$

where the ratio threshold Td is the engineering experience value, which can be adjusted based on actual needs.

S802, determining the relative position of the feature point and the relative attitude of the real-time image based on the 3D information corresponding to the identified feature point matching the feature point.

More specifically, the 3D information of the feature point may be obtained based on the 3D information corresponding to the identified feature point matching the feature point by using the PnP algorithm to determine the relative position of the feature point and the relative attitude of the real-time image.

The PnP algorithm uses a series of World Coordinates 3D points and the corresponding Pixel coordinates 2D points in the image to estimate the attitude of the imaging module 300, which is the needed position information.

$$\begin{bmatrix} u \\ v \\ 1 \end{bmatrix} = \begin{bmatrix} \alpha_x & \gamma & \mu_0 \\ 0 & \alpha_y & v_0 \\ 0 & 0 & 1 \end{bmatrix} \begin{bmatrix} x_c \\ y_c \\ z_c \\ 1 \end{bmatrix} = K[R \quad T] \begin{bmatrix} x_w \\ y_w \\ z_w \\ 1 \end{bmatrix} = \begin{bmatrix} \alpha_x & \gamma & \mu_0 \\ 0 & \alpha_y & v_0 \\ 0 & 0 & 1 \end{bmatrix} \begin{bmatrix} r_{11} & r_{12} & r_{13} & r_{14} \\ r_{21} & r_{22} & r_{23} & r_{24} \\ r_{31} & r_{32} & r_{33} & r_{34} \end{bmatrix} \begin{bmatrix} x_w \\ y_w \\ z_w \\ 1 \end{bmatrix} \tag{5}$$

where $[x_c,y_c,z_c,1]^T$ represents the 3D point in the camera coordinates. For other parameters in Formula (5), reference may be made to Formula (2), which will not be repeated here.

S803, adjusting the flight trajectory of the UAV based on the relative position of each feature point.

The relative position in the process at S803 may include height, horizontal distance, etc., thereby obtaining the current position of the UAV relative to the target. For example, in one embodiment, the process at S802 can obtain the height of each feature point in the real-time image relative to the center position of the target, and adjust the flight trajectory of the UAV based on the height of each feature point in the real-time image relative to the center position of the target. More specifically, the UAV needs to be controlled to move around from the bottom of the target to the top of the target. The number of laps may be ten, such that the UAV needs to fly 1/10 of the height of the target for each lap. In this embodiment, based on the determined height of each feature point in the real-time image relative to the center position of the target, the current height of the UAV to the bottom of the target can be determined. Then the UAV's flight trajectory may be adjusted based on the determined current height of the UAV to the bottom of the target to ensure the accuracy of the flight of the UAV.

S804, adjusting the imaging direction of the imaging module 300 based on the relative attitude of the real-time image, such that the imaging direction of the imaging module 300 is facing the specific position of the target.

In the process at S804, the relative position may reflect the direction of the imaging module 300 on the UAV relative to the specific position of the target. The specific position can be the center position of the target or the vertex position of the target. In this embodiment, the specific position is the center of the target. During the flight of the UAV, the attitude of the gimbal 200 can be controlled (taking the three-axis gimbal 200 as an example, it can control the yaw angle, the pitch angle, and the roll angle of the three-axis gimbal 200 to realize the control of the attitude of the gimbal 200) based on the relative attitude of the real-time image, thereby adjusting the orientation of the imaging module 300 to ensure that the lens of the imaging module 300 always faces the center of the target, and ensure that the image captured by the imaging module 300 changes smoothly.

The imaging method of this embodiment may be carried out by a UAV, and the process at S101 can be performed by an image processing unit on the UAV and the flight controller 100 in cooperation. More specifically, the flight controller 100 can perform the process at S301, and the image processing unit can perform the processes at S302 and S303. The processes at S102 and S103 can be performed by the flight controller 100 and/or a gimbal controller. The process at S104 can be performed by the image processing unit and the flight controller 100. More specifically, the processes at S801 and S802 can be performed by the image processing unit, and the process at S803 and S804 can be executed by the flight controller 100. Of course, the processes at S101, 102, S103, and S104 can also be performed by the same independent controller disposed on the UAV.

In the imaging method of the embodiment of the present disclosure, a 3D model of the target can be obtained through vision technology. In the process of the UAV moving around the target (especially moving around the target at a close range), even if only the local information of the target is captured, the current attitude relationship between the UAV and the target can be determined based on the 3D model. As such, the flight trajectory of the UAV and/or the imaging direction of the imaging module 300 can be automatically adjusted based on the determined current attitude relationship between the UAV and the target. Therefore, the composition of the UAV is more professional, and the imaging method of the present disclosure is particular suitable for close-range imaging of large targets.

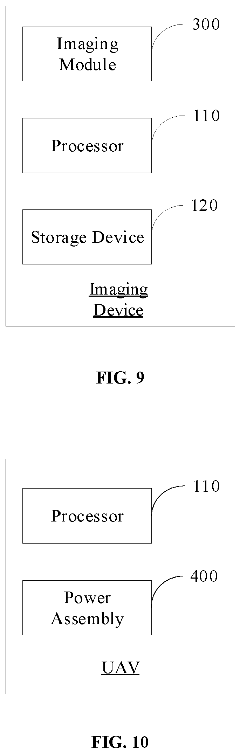

Corresponding to the imaging method of the previous embodiment, an embodiment of the present disclosure further provides an imaging device. FIG. 9 is a structural block diagram of an imaging device according to an embodiment of the present disclosure. Referring to FIG. 9, the imaging device includes an imaging module 300, a processor 110, and a storage device 120, where the imaging module 300 is electrically connected to the processor 110.

The storage device 120 may include a volatile memory, such as a random-access memory (RAM). The storage device 120 may also include a non-volatile memory, such as a flash memory, a hard disk drive (HDD), or a solid-state drive (SSD). The storage device 120 may also include a combination of the above types of memories.

The processor 110 may be a central processing unit (CPU). The processor 110 may further include a hardware chip. The hardware chip mentioned above may be an application specific integrated circuit (ASIC), a programmable logic device (PLD), or a combination thereof. The PLD mentioned above may be a complex programmable logic device (CPLD), a field-programmable gate array (FPGA), a generic array logic (GAL), or any combination thereof. In this embodiment, the processor 110 may include one or more. In some embodiments, the processor 110 may include an image processing unit, a flight controller 100, and/or a gimbal controller.

The processor 110 may call the program instruction stored in the storage device 120. When the programs instruction is executed, causes the processor 110 to build a 3D model of a target based on vision technology, where the 3D model includes 2D information of the target at different angles and 3D information corresponding to each piece of 2D information; acquire real-time images captured by the imaging module 300 on the UAV following the UAV moving around the target; adjust the flight trajectory of the UAV and/or the imaging direction of the imaging module 300 based on the real-time images, the 2D information of the target at different angles, and the 3D information corresponding to each piece of 2D information.

In one embodiment, the processor 110 may be configured to obtain panoramic images of different angles that the imaging module 300 follows the UAV to move around the target with a specific radius and are obtained for the target; and obtain the 2D information of the target a different angles and the 3D information corresponding to each piece of 2D information based on the obtained panoramic images of different angles.

In one embodiment, the 2D information may be a feature descriptor of a feature point, and the 3D information may include the 3D coordinates of each feature point, and the attitude relationship between the panoramic images of different angles. The processor 110 may be configured to extract the feature descriptor of the corresponding feature point from each panoramic image; and determine the 3D coordinates of each feature point and the attitude relationship between the panoramic images of different angles based on the feature descriptors of each panoramic image.

In one embodiment, before extracting the feature descriptor of the corresponding feature point from each panoramic image, the processor 110 may be further configured to receive a target to be tracked sent by a terminal device; and determine a target box corresponding to the target in each panoramic image based on the received target.

In one embodiment, after determining that target box corresponding to the target in each panoramic image based on the received target, and before extracting the feature descriptor of the corresponding feature point from each panoramic image, the processor 110 may be further configured to perform a super-pixel segmentation processing on the target box corresponding to the target in each of the determined panoramic images to obtain the corresponding pixel block.

In one embodiment, after performing the super-pixel segmentation processing on the target box corresponding to the target in each of the determined panoramic images to obtain the corresponding pixel block, the processor 110 may be further configured to adjust the boundary pixels of the pixel blocks corresponding to each panoramic image.

In one embodiment, the processor 110 may be configured to determine that the boundary pixel is a part of the pixel block when the proportion of the boundary pixels in the pixel area of the corresponding target box is greater than to equal to a preset threshold.

In one embodiment, the processor 110 may be configured to use at least one of SLIC, graph-based, NCut, turbopixel, quick-shift, graph-cut a, and graph-cut b to perform the super-pixel segmentation processing on the target box corresponding to the target in each of the determined panoramic images.

In one embodiment, the processor 110 may be configured to use SIFT, SURF, or GLOH to obtain the feature descriptors of the feature points corresponding to each panoramic image from the pixel block corresponding to each panoramic image.

In one embodiment, the processor 110 may be configured to determine a transformation matrix between two adjacent panoramic images at the time of acquisition based on the feature descriptors of the feature points corresponding to each panoramic image; and determine the 3D coordinates of the feature point corresponding to the current panoramic image, and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time.

In one embodiment, the processor 110 may be configured to determine the target panoramic image associated with the feature point from all the acquired panoramic images for each feature point, based on a feature point tracking algorithm; determine a mapping relationship between the position of the feature point in two adjacent target panoramic images at the time of acquisition based on the feature descriptors of the two adjacent target panoramic images at the time of acquisition; and determine the transformation matrix between the two adjacent panoramic images at the time of acquisition based on the mapping relationship between the positions of a plurality of feature points in the two adjacent panoramic images of the target.

In one embodiment, the feature point tracking algorithm is KLT.

In one embodiment, the processor 110 may be configured to determine the linear mapping relationship between the positions of the feature points in the two adjacent target panoramic images at the time of acquisition based on the feature descriptors of the two adjacent target panoramic images at the time of acquisition.

In one embodiment, after determining the transformation matrix between the current second target panoramic image and the panoramic image at the last acquisition based on the mapping relationship between the position of the feature point corresponding to the current second target panoramic image in the current second target panoramic image and the position of the feature point corresponding to the current second target panoramic image in the panoramic image at the last acquisition time, and before determining the 3D coordinates of the feature point corresponding to the current panoramic image, and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time, the processor 110 may be further configured to update the target box corresponding to the target in the current panoramic image based on the transformation matrix between the current panoramic image and the panoramic image at the last acquisition time.

In one embodiment, after updating the target box corresponding to the target in the current panoramic image based on the transformation matrix between the current panoramic image and the panoramic image at the last acquisition time, and before determining the 3D coordinates of the feature point corresponding to the current panoramic image, and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time, the processor 110 may be further configured to use SIFT, SURF, or GLOH to extract feature descriptors of new feature points from the updated target box of the current panoramic image.

In one embodiment, the processor 110 may be configured to use the bundle adjustment algorithm to estimate the 3D coordinates of the feature points corresponding to the current panoramic image , and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time.

In one embodiment, before using the bundle adjustment algorithm to estimate the 3D coordinates of the feature points corresponding to the current panoramic image , and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time, the processor 110 may be further configured to obtain the attitude relationship between adjacent panoramic images based on the vison module and the IMU on the UAV, the navigation system and the IMU on the UAV, or the vision module, the navigation system, and the IMU on the UAV. Using the bundle adjustment algorithm to estimate the 3D coordinates of the feature points corresponding to the current panoramic image , and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time may include using the attitude relationship as the initial value of the bundle adjustment; and estimating the 3D coordinates of the feature points corresponding to the current panoramic image, and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time.

In one embodiment, before adjusting the flight trajectory and/or the imaging direction of the imaging module based on the real-time image, the 2D information of the target at different angle, and the 3D information corresponding to each piece of 2D information, the processor 110 may be further configured to use SIFT, SURF, or GLOH to extract feature descriptors corresponding to the feature points of the real-time image from the real-time image.

In one embodiment, the processor 110 may be configured to identify the 2D information of the feature point matching the feature point in the 3D model for each feature point in the real-time image; determine the relative position of the feature point and the relative attitude of the real-time image based on the 3D information corresponding to the identified 2D information of the feature point matching the feature point; adjust the flight trajectory of the UAV based on the relative position of each feature point; and adjust the imaging direction of the imaging module 300 based on the relative attitude of the real-time image, such that the imaging direction of the imaging module 300 is facing the specific position of the target.

In one embodiment, the processor 110 may be configured to identify the 3D information of the feature point closest to the feature point in the 3D model for each feature point in the real-time image.

In one embodiment, the processor 110 may be configured to determine the 2D information of the feature point closest to the feature point in the 3D model, and the 2D information of the feature point second closest to the feature point in the 3D model for each feature point in the real-time image; and determine whether the closest feature point matched by the feature point matches correctly based on the distance from the feature point to the closest feature point matched by the feature point, and the distance from the feature point to the second closest feature point matched by the feature point.

In one embodiment, the processor 110 may be configured to determine that the closest feature point matched by the feature point matches accurately when the ratio between the distance between the feature point and the closest feature point matched by the feature point and the distance between the feature point and the second closest feature point matched by the feature point is greater than a ratio threshold.

In one embodiment, the processor 110 may be configured to use the PnP algorithm to determine the relative position of the feature point and the relative attitude of the real-time image based on the 3D information corresponding to the identified 2D information of the feature point matching the feature point.

It should be noted that the imaging device of this embodiment can be further explained with reference to the imaging method of the above embodiment.

In the imaging device of the embodiment of the present disclosure, a 3D model of the target can be obtained through vision technology. In the process of the UAV moving around the target (especially moving around the target at a close range), even if only the local information of the target is captured, the current attitude relationship between the UAV and the target can be determined based on the 3D model. As such, the flight trajectory of the UAV and/or the imaging direction of the imaging module 300 can be automatically adjusted based on the determined current attitude relationship between the UAV and the target. Therefore, the composition of the UAV is more professional, and the imaging device of the present disclosure is particular suitable for close-range imaging of large targets.

In addition, referring FIG. 10, an embodiment of the present disclosure further provides a UAV. The UAV includes a body (not shown in FIG. 10), power assembly 400, and a processor 110. An imaging module can be disposed on the body, and the power assembly 400 can be used to drive the body to move. The processor 110 of this embodiment is disposed in the body, and the processor 110 is electrically connected to the power assembly 400 and the imaging module, respectively.

The processor 110 may be a central processing unit (CPU). The processor 110 may further include a hardware chip. The hardware chip mentioned above may be an application specific integrated circuit (ASIC), a programmable logic device (PLD), or a combination thereof. The PLD mentioned above may be a complex programmable logic device (CPLD), a field-programmable gate array (FPGA), a generic array logic (GAL), or any combination thereof. In this embodiment, the processor 110 may include one or more. In some embodiments, the processor 110 may include an image processing unit, a flight controller 100, and/or a gimbal controller.

The processor 110 may implement the corresponding methods shown in the embodiments of the present disclosure in FIG. 1, FIG. 3, FIG. 5, FIG. 6, and FIG. 8.

More specifically, the processor 110 may be configured to build a 3D model of a target based on vision technology, where the 3D model includes 2D information of the target at different angles and 3D information corresponding to each piece of 2D information; control the UAV to move around the target; acquire real-time images capture by the imaging module on the UAV; and adjust the flight trajectory of the UAV and/or the imaging direction of the imaging module based on the real-time images, the 2D information of the target at different angles, and the 3D information corresponding to each piece of 2D information.

In one embodiment, the processor 110 may be configured to obtain the panoramic images of different angles captured by the imaging module for the target; and obtain the 2D information of the target at different angles and the 3D information corresponding to each 2D information based on the obtained panoramic images from different angles.

In one embodiment, the 2D information may be the pixel coordinates of feature points, the 3D information may include the 3D coordinates of each feature point and the attitude relationship between the panoramic images of different angles, and the pixel coordinates may be represented by the feature descriptors. The processor 110 may be configured to extract the feature descriptor of the corresponding feature point from each panoramic image; and determine the 3D coordinates of each feature point and the attitude relationship between the panoramic images of different angles based on the feature descriptors of each panoramic image.

In one embodiment, before extracting the feature descriptor of the corresponding feature point from each panoramic image, the processor 110 may be further configured to receive a target to be tracked sent by a terminal device; and determine a target box corresponding to the target in each panoramic image based on the received target.

In one embodiment, after determining that target box corresponding to the target in each panoramic image based on the received target, and before extracting the feature descriptor of the corresponding feature point from each panoramic image, the processor 110 may be further configured to perform a super-pixel segmentation processing on the target box corresponding to the target in each of the determined panoramic images to obtain the corresponding pixel block.

In one embodiment, after performing the super-pixel segmentation processing on the target box corresponding to the target in each of the determined panoramic images to obtain the corresponding pixel block, the processor 110 may be further configured to adjust the boundary pixels of the pixel blocks corresponding to each panoramic image.

In one embodiment, the processor 110 may be configured to determine that the boundary pixel is a part of the pixel block when the proportion of the boundary pixels in the pixel area of the corresponding target box is greater than to equal to a preset threshold.

In one embodiment, the processor 110 may be configured to use at least one of SLIC, graph-based, NCut, turbopixel, quick-shift, graph-cut a, and graph-cut b to perform the super-pixel segmentation processing on the target box corresponding to the target in each determined panoramic image.

In one embodiment, the processor 110 may be configured to use SIFT, SURF, or GLOH to obtain the feature descriptors of the feature points corresponding to each panoramic image from the pixel block corresponding to each panoramic image.

In one embodiment, the processor 110 may be configured to determine a transformation matrix between two adjacent panoramic images at the time of acquisition based on the feature descriptors of the feature points corresponding to each panoramic image; and determine the 3D coordinates of the feature point corresponding to the current panoramic image, and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time.

In one embodiment, the processor 110 may be configured to determine the target panoramic image associated with the feature point from all the acquired panoramic images for each feature point, based on a feature point tracking algorithm; determine a mapping relationship between the position of the feature point in two adjacent target panoramic images at the time of acquisition based on the feature descriptors of the two adjacent target panoramic images at the time of acquisition; and determine the transformation matrix between the two adjacent panoramic images at the time of acquisition based on the mapping relationship between the positions of a plurality of feature points in the two adjacent panoramic images of the target.

In one embodiment, the feature point tracking algorithm is KLT.

In one embodiment, the processor 110 may be configured to determine the linear mapping relationship between the positions of the feature points in the two adjacent target panoramic images at the time of acquisition based on the feature descriptors of the two adjacent target panoramic images at the time of acquisition.

In one embodiment, after determining the transformation matrix between the current second target panoramic image and the panoramic image at the last acquisition based on the mapping relationship between the position of the feature point corresponding to the current second target panoramic image in the current second target panoramic image and the position of the feature point corresponding to the current second target panoramic image in the panoramic image at the last acquisition time, and before determining the 3D coordinates of the feature point corresponding to the current panoramic image, and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time, the processor 110 may be further configured to update the target box corresponding to the target in the current panoramic image based on the transformation matrix between the current panoramic image and the panoramic image at the last acquisition time.

In one embodiment, after updating the target box corresponding to the target in the current panoramic image based on the transformation matrix between the current panoramic image and the panoramic image at the last acquisition time, and before determining the 3D coordinates of the feature point corresponding to the current panoramic image, and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time, the processor 110 may be further configured to use SIFT, SURF, or GLOH to extract feature descriptors of new feature points from the updated target box of the current panoramic image.

In one embodiment, the processor 110 may be configured to use the bundle adjustment algorithm to estimate the 3D coordinates of the feature points corresponding to the current panoramic image , and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time.

In one embodiment, before using the bundle adjustment algorithm to estimate the 3D coordinates of the feature points corresponding to the current panoramic image , and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time, the processor 110 may be further configured to obtain the attitude relationship between adjacent panoramic images based on the vison module and the IMU on the UAV, the navigation system and the IMU on the UAV, or the vision module, the navigation system, and the IMU on the UAV. Using the bundle adjustment algorithm to estimate the 3D coordinates of the feature points corresponding to the current panoramic image , and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time may include using the attitude relationship as the initial value of the bundle adjustment; and estimating the 3D coordinates of the feature points corresponding to the current panoramic image, and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time.

In one embodiment, before adjusting the flight trajectory and/or the imaging direction of the imaging module based on the real-time image, the 2D information of the target at different angle, and the 3D information corresponding to each piece of 2D information, the processor 110 may be further configured to use SIFT, SURF, or GLOH to extract feature descriptors corresponding to the feature points of the real-time image from the real-time image.

In one embodiment, the processor 110 may be configured to identify the 2D information of the feature point matching the feature point in the 3D model for each feature point in the real-time image; determine the relative position of the feature point and the relative attitude of the real-time image based on the 3D information corresponding to the identified 2D information of the feature point matching the feature point; adjust the flight trajectory of the UAV based on the relative position of each feature point; and adjust the imaging direction of the imaging module 300 based on the relative attitude of the real-time image, such that the imaging direction of the imaging module 300 is facing the specific position of the target.

In one embodiment, the processor 110 may be configured to identify the 3D information of the feature point closest to the feature point in the 3D model for each feature point in the real-time image.

In one embodiment, the processor 110 may be configured to determine the 2D information of the feature point closest to the feature point in the 3D model, and the 2D information of the feature point second closest to the feature point in the 3D model for each feature point in the real-time image; and determine whether the closest feature point matched by the feature point matches correctly based on the distance from the feature point to the closest feature point matched by the feature point, and the distance from the feature point to the second closest feature point matched by the feature point.

In one embodiment, the processor 110 may be configured to determine that the closest feature point matched by the feature point matches accurately when the ratio between the distance between the feature point and the closest feature point matched by the feature point and the distance between the feature point and the second closest feature point matched by the feature point is greater than a ratio threshold.

In one embodiment, the processor 110 may be configured to use the PnP algorithm to determine the relative position of the feature point and the relative attitude of the real-time image based on the 3D information corresponding to the identified 2D information of the feature point matching the feature point.

In addition, an embodiment of the present disclosure further provides a computer-readable storage medium on which a computer program can be stored. When the program is executed by the processor 110, the processes of the imaging method of the embodiments mentioned above can be implemented.

A person having ordinary skills in the art can appreciate that all or part of the above embodiments may be realized through hardware related to corresponding the computer program. The computer program may be stored in a non-transitory computer-readable medium. When the program is executed by a processor, steps of the above embodiments of the disclosed method may be performed. The storage medium may include a magnetic disk, an optical disk, a read-only memory ("ROM"), a random access memory ("RAM"), etc.

The above embodiments are only some examples of the present disclosure, and do not limit the scope of the present disclosure. Although the technical solutions of the present disclosure are explained with reference to the above-described various embodiments, a person having ordinary skills in the art can understand that the various embodiments of the technical solutions may be modified, or some or all of the technical features of the various embodiments may be equivalently replaced. Such modifications or replacement do not render the spirit of the technical solutions falling out of the scope of the various embodiments of the technical solutions of the present disclosure.

**Claims**

1. An imaging method applied to an unmanned aerial vehicle (UVA), comprising:

    building a 3D model of a target based on vision technology, the 3D model including 2D information of the target at different angles and 3D information corresponding to each piece of the 2D information;
    controlling the UAV to move around the target;
    acquiring real-time images captured by an imaging module on the UAV; and
    adjusting a flight trajectory of the UAV and/or an imaging direction of the imaging module based on the real-time images, the 2D information of the target being at different angles, and the 3D information corresponding to each piece of the 2D information.

2. The method of claim 1, wherein building the 3D model of the target based on vision technology includes:

    controlling the UAV to move around the target with a radius greater than a certain distance;
    obtaining panoramic images of different angles obtained by the imaging module for the target;
    obtaining the 2D information of the target at different angles and the 3D information corresponding to each piece of 2D information based on the obtained panoramic images from different angles.

3. The method of claim 2, wherein:

    the 2D information includes pixel coordinates of feature points, the 3D information includes the 3D coordinates of each feature point and an attitude relationship between the panoramic images of different angles, and the pixel coordinates are represented by feature descriptors;
    obtaining the 2D information of the target at different angles and the 3D information corresponding to each piece of 2D information based on the obtained panoramic images from different angles includes:

extracting the feature descriptor of the corresponding feature point from each panoramic image; and determining the 3D coordinates of each feature point and the attitude relationship between the panoramic images of different angles based on the feature descriptors of each panoramic image.

4. The method of claim 3, wherein before extracting the feature descriptor of the corresponding feature point from each panoramic image further includes:

   receiving the target to be tracked sent by a terminal device; and
   determining a target box corresponding to the target in each panoramic image based on the received target.

5. The method of claim 4, after determining the ding box corresponding to the target in each panoramic image based on the received target and before extracting the feature descriptor of the corresponding feature point from each panoramic image further includes:
   performing a super-pixel segmentation processing on the target box corresponding to the target in each of the determined panoramic images to obtain a corresponding pixel block.

6. The method of claim 5, wherein after performing the super-pixel segmentation processing on the target box corresponding to the target in each of the determined panoramic images to obtain the corresponding pixel block further includes:
   adjusting a boundary pixel of the pixel block corresponding to each panoramic image.

7. The method of claim 6, wherein adjusting the boundary pixel of the pixel block corresponding to each panoramic image includes:
   determining the boundary pixel as a part of the pixel block in response to a proportion of the boundary pixels in a pixel area of the corresponding target box being greater than or equal to a predetermined threshold.

8. The method of claim 5, wherein performing the super-pixel segmentation processing on the target box corresponding to the target in each of the determined panoramic images includes:
   using at least one of SLIC, graph-based, NCut, turbopixel, quick-shift, graph-cut a, and graph-cut b to perform the super-pixel segmentation processing on the target box corresponding to the target in each of the determined panoramic images.

9. The method of claim 5, wherein extracting the feature descriptor of the corresponding feature point from each panoramic image includes:
   using SIFT, SURF, or GLOH to obtain the feature descriptors of the feature points corresponding to each panoramic image from the pixel block corresponding to each panoramic image.

10. The method of claim 3, wherein determining the 3D coordinates of each feature point and the attitude relationship between the panoramic images of different angles based on the feature descriptors of the feature points of each panoramic image includes:

    determining a transformation matrix between two adjacent panoramic images at a time of acquisition based on the feature descriptors of the panoramic images; and
    determining the 3D coordinates of the feature descriptors corresponding to a current panoramic image and the attitude relationship between the current panoramic image and the panoramic image at a next acquisition time based on the transformation matrix, the feature descriptor of the feature point corresponding to the current panoramic image, and the feature descriptor of the feature point corresponding to the panoramic image at the next acquisition time.

11. The method of claim 10, wherein determining the transformation matrix between the two adjacent panoramic images at the time of acquisition includes:

    for each feature point, determining a target panoramic image associated with the feature point from all obtained panoramic images based on a feature point tracking algorithm;
    determining a mapping relationship between positions of the feature point in two adjacent target panoramic images at the time of acquisition based on the feature descriptors of the feature point in the two adjacent panoramic images at the time of acquisition; and
    determining the transformation matrix between the two adjacent panoramic images at the time of acquisition based on the mapping relationship of a plurality of feature points in the two adjacent target panoramic images.

12. The method of claim 11, wherein:
    the feature point tracking algorithm is KLT.

13. The method of claim 11, wherein determining the mapping relationship between the position of the feature point in two adjacent target panoramic images at the time of acquisition based on the feature descriptors of the feature point in the two adjacent panoramic images at the time of acquisition includes:
    determining a linear mapping relationship between the positions of the feature point in the two adjacent target panoramic images at the time of acquisition based on the feature descriptors of the feature point in the two adjacent target panoramic images at the time of acquisition.

14. The method of claim 11, wherein after determining the transformation matrix between the two adjacent panoramic images at the time of acquisition based on the mapping relationship of a plurality of feature points in the two adjacent target panoramic images, and before determining the 3D coordinates of the feature descriptors corresponding to the current panoramic image and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time further includes:
    updating the target box corresponding to the target in the current panoramic image based on the transformation matrix between the current panoramic image and the panoramic image at a last acquisition time.

15. The method of claim 14, wherein after updating the target box corresponding to the target in the current panoramic image based on the transformation matrix between the current panoramic image and the panoramic image at the last acquisition time, and before determining the 3D coordinates of the feature descriptors corresponding to the current panoramic image and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time further includes:
    using SIFT, SURF, or GLOH to extract new feature descriptors from the updated target box of the current panoramic image.

16. The method of claim 15, wherein determining the 3D coordinates of the feature descriptors corresponding to the current panoramic image and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time includes:
    using a bundle adjustment algorithm to estimate the 3D coordinates of the feature points corresponding to the current panoramic image and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time.

17. The method of claim 16, wherein before using the bundle adjustment algorithm to estimate the 3D coordinates of the feature points corresponding to the current panoramic image and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time further includes:

    obtaining the attitude relationship between adjacent panoramic images through a vision module and an inertial measurement unit (IMU) on the UAV, or a navigation system and the IMU on the UAV, or the visional module, the navigation system, and the IMU on the UAV;
    using the bundle adjustment algorithm to estimate the 3D coordinates of the feature points corresponding to the current panoramic image and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time includes:

using the attitude relationship as an initial value of the bundle adjustment; and

estimating the 3D coordinates of the feature points corresponding to the current panoramic image and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time.

18. The method of claim 1, wherein before adjusting the flight trajectory of the UAV and/or the imaging direction of the imaging module based on the real-time images, the 2D information of the target being at different angles, and the 3D information corresponding to each piece of 2D information further includes:

using SIFT, SURF, or GLOH to extract the feature descriptors of the feature points corresponding to the real-time image from the real-time image.

19. The method of claim 18, wherein adjusting the flight trajectory of the UAV and/or the imaging direction of the imaging module based on the real-time image and the 3D information of the target includes:

identifying the 2D information of the feature point matching the feature point in the 3D model for each feature point in the real-time image;

determining a relative position of the feature point and a relative attitude of the real-time image based on the 3D information corresponding to the 2D information of the identified feature point matching the feature point;

adjusting the flight trajectory of the UAV based on the relative position of each feature point; and

adjusting the imaging direction of the imaging module based on the relative position of the real-time image such that the imaging direction of the imaging module is facing a specific position of the target.

20. The method of claim 19, wherein identifying the 2D information of the feature point matching the feature point in the 3D model for each feature point in the real-time image includes:

identifying the 2D information of a feature point closest to the feature point in the 3D model for each feature point in the real-time image.

21. The method of claim 20, wherein identifying the 2D information of the feature point closest to the feature point in the 3D model for each feature point in the real-time image includes:

determining the 2D information of the feature point closest to the feature point in the 3D model and the 3D information of a feature point second closet to the feature point in the 3D model for each feature point in the real-time image; and

determining whether the closest feature point matched by the feature point matches accurately based on a distance from the feature point to the closest feature point matched by the feature point, and a distance from the feature point to the second closest feature point matched by the feature point.

22. The method of claim 21, wherein determining whether the closest feature point matched by the feature point matches accurately based on a distance from the feature point to the closest feature point matched by the feature point, and a distance from the feature point to the second closest feature point matched by the feature point includes:

determining that the closest feature point matched by the feature point matches accurately when a ratio between the distance between feature point and the closest feature point matched by the feature point and the distance between the feature point and the second closest feature point matched by the feature point is greater than a ratio threshold.

23. The method of claim 19, wherein determining the relative position of the feature point and the relative attitude of the real-time image based on the 3D information corresponding to the 2D information of the identified feature point matching the feature point includes:

using a PnP algorithm to determine the relative position of the feature point and the relative attitude of the real-time image based on the 3D information corresponding to the identified 2D information of the feature point matching the feature point.

24. An imaging device applied to a UAV, comprising:

a storage device storing program instructions;

a processor; and

an imaging module electrically connected to the processor, wherein
the processor calls the program instructions that, when executed by the processor, causes the processor to:

build a 3D model of a target based on vision technology, the 3D model including 2D information of the target being at different angles and 3D information corresponding to each piece of 2D information;
acquire real-time images captured by the imaging module following the UAV moving around the target; and
adjusting a flight trajectory of the UAV and/or an imaging direction of the imaging module based on the real-time images, the 2D information of the target being at different angles, and the 3D information corresponding to each piece of 2D information.

25. The device of claim 24, wherein the processor is configured to:

acquire panoramic images of different angles captured by the imaging module following the UAV moving around the target with a radius of a specific distance;
obtain the 2D information of the target at different angles and the 3D information corresponding to each piece of 2D information based on the obtained panoramic images from different angles.

26. The device of claim 25, wherein the 2D information is a pixel coordinates of feature points, the 3D information includes the 3D coordinates of each feature point and an attitude relationship between the panoramic images of different angles, and the pixel coordinates are represented by feature descriptors; and
the processor is configured to:

extract the feature descriptor of the corresponding feature point from each panoramic image; and
determine the 3D coordinates of each feature point and the attitude relationship between the panoramic images of different angles based on the feature descriptors of each panoramic image

27. The device of claim 26, wherein before the processor extracting the feature descriptor of the corresponding feature point from each panoramic image, the processor is further configured to:

receive the target to be tracked sent by a terminal device; and
determine a target box corresponding to the target in each panoramic image based on the received target.

28. The device of claim 27, wherein after the processor determining the ding box corresponding to the target in each panoramic image based on the received target, and before extracting the feature descriptor of the corresponding feature point from each panoramic image, the processor is further configured to:
perform a super-pixel segmentation processing on the target box corresponding to the target in each of the determined panoramic images to obtain a corresponding pixel block.

29. The device of claim 28, wherein after the processor performing the super-pixel segmentation processing on the target box corresponding to the target in each of the determined panoramic images to obtain the corresponding pixel block, the processor is further configured to:
adjust a boundary pixel of the pixel block corresponding to each panoramic image.

30. The device of claim 29, wherein the processor is configured to:
determine the boundary pixel as a part of the pixel block in response to a proportion of the boundary pixels in a pixel area of the corresponding target box being greater than or equal to a predetermined threshold.

31. The device of claim 28, wherein the processor is configured to:
use at least one of SLIC, graph-based, NCut, turbopixel, quick-shift, graph-cut a, and graph-cut b to perform the super-pixel segmentation processing on the target box corresponding to the target in each of the determined panoramic images.

32. The device of claim 28, wherein the processor is configured to:
use SIFT, SURF, or GLOH to obtain the feature descriptors of the feature points corresponding to each panoramic image from the pixel block corresponding to each panoramic image.

33. The device of claim 26, wherein the processor is configured to:

determine a transformation matrix between two adjacent panoramic images at a time of acquisition; and determine the 3D coordinates of the feature descriptors corresponding to a current panoramic image and the attitude relationship between the current panoramic image and the panoramic image at a next acquisition time based on the transformation matrix, the feature descriptor of the feature point corresponding to the current panoramic image, and the feature descriptor of the feature point corresponding to the panoramic image at the next acquisition time.

34. The device of claim 33, wherein the processor is configured to:

for each feature point, determine a target panoramic image associated with the feature point from all obtained panoramic images based on a feature point tracking algorithm; determine a mapping relationship between a position of the feature point in two adjacent target panoramic images at the time of acquisition based on the feature descriptors of the feature point in the two adjacent panoramic images at the time of acquisition; and determine the transformation matrix between the two adjacent panoramic images at the time of acquisition based on the mapping relationship of a plurality of feature points in the two adjacent target panoramic images.

35. The device of claim 34, wherein:
the feature point tracking algorithm is KLT.

36. The device of claim 34, the processor is configured to:
determine a linear mapping relationship between the position of the feature point in the two adjacent target panoramic images at the time of acquisition based on the feature descriptors of the feature point in the two adjacent target panoramic images at the time of acquisition.

37. The device of claim 34, after the processor determining the transformation matrix between a current second target panoramic image and the panoramic image at a last acquisition time based on the mapping relationship between the position of the feature point corresponding to the current second target panoramic image in the current second target panoramic image and the position of the feature point corresponding to the current second target panoramic image in the panoramic image at the last acquisition time, and before determining the 3D coordinates of the feature descriptors corresponding to the current panoramic image and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time, the processor is further configured to:
update the target box corresponding to the target in the current panoramic image based on the transformation matrix between the current panoramic image and the panoramic image at a last acquisition time.

38. The device of claim 37, wherein after the processor updating the target box corresponding to the target in the current panoramic image based on the transformation matrix between the current panoramic image and the panoramic image at the last acquisition time, and before determining the 3D coordinates of the feature descriptors corresponding to the current panoramic image and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time, the processor is further configured to:
use SIFT, SURF, or GLOH to extract new feature descriptors from the updated target box of the current panoramic image.

39. The device of claim 38, wherein the processor is configured to:
use a bundle adjustment algorithm to estimate the 3D coordinates of the feature points corresponding to the current panoramic image and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time.

40. The device of claim 39, wherein before the processing using the bundle adjustment algorithm to estimate the 3D coordinates of the feature points corresponding to the current panoramic image and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time, the processor is further configured to:

obtain the attitude relationship between adjacent panoramic images through a vision module and an inertial measurement unit (IMU) on the UAV, or a navigation system and the IMU on the UAV, or the visional module, the navigation system, and the IMU on the UAV;

the processor using the bundle adjustment algorithm to estimate the 3D coordinates of the feature points corresponding to the current panoramic image and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time includes:

use the attitude relationship as an initial value of the bundle adjustment; and

estimate the 3D coordinates of the feature points corresponding to the current panoramic image and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time.

41. The device of claim 24, before the processor adjusting the flight trajectory of the UAV and/or the imaging direction of the imaging module based on the real-time images, the 2D information of the target being at different angles, and the 3D information corresponding to each piece of 2D information, the processor is further configured to: use SIFT, SURF, or GLOH to extract the feature descriptors of the feature points corresponding to the real-time image from the real-time image.

42. The device of claim 41, wherein the processor is configured to:

identify the 2D information of the feature point matching the feature point in the 3D model for each feature point in the real-time image;

determine a relative position of the feature point and a relative attitude of the real-time image based on the 3D information corresponding to the 2D information of the identified feature point matching the feature point;

adjust the flight trajectory of the UAV based on the relative position of each feature point; and

adjust the imaging direction of the imaging module based on the relative position of the real-time image such that the imaging direction of the imaging module is facing a specific position of the target.

43. The device of claim 42, wherein the processor is configured to: identify the 2D information of a feature point closest to the feature point in the 3D model for each feature point in the real-time image.

44. The device of claim 43, wherein the processor is configured to:

determine the 2D information of the feature point closest to the feature point in the 3D model and the 3D information of a feature point second closet to the feature point in the 3D model for each feature point in the real-time image; and

determine whether the closest feature point matched by the feature point matches accurately based on a distance from the feature point to the closest feature point matched by the feature point, and a distance from the feature point to the second closest feature point matched by the feature point.

45. The device of claim 44, wherein the processor is configured to: determine that the closest feature point matched by the feature point matches accurately when a ratio between the distance between feature point and the closest feature point matched by the feature point and the distance between the feature point and the second closest feature point matched by the feature point is greater than a ratio threshold.

46. The device of claim 42, wherein the processor is configured to: using a PnP algorithm to determine the relative position of the feature point and the relative attitude of the real-time image based on the 3D information corresponding to the identified 2D information of the feature point matching the feature point.

**47.** The device of claim 24, wherein:
the processor includes one or more.

**48.** A UAV, comprising:

a body, the body carrying an imaging module;
a power assembly for driving the body to move; and
a processor disposed in the body, the processor being electrically connected to the power assembly and the imaging module, respectively, wherein the processor is configured to:

build a 3D model of a target based on vision technology, the 3D model including 2D information of the target being at different angles and 3D information corresponding to each piece of 2D information;
control the UAV to move around the target;
acquire real-time images captured by the imaging module carried on the UAV; and
adjusting a flight trajectory of the UAV and/or an imaging direction of the imaging module based on the real-time images, the 2D information of the target being at different angles, and the 3D information corresponding to each piece of 2D information.

**49.** The UAV of claim 48, wherein the processor is configured to:

acquire panoramic images of different angles captured by the imaging module for the target;
obtain the 2D information of the target being at different angles and the 3D information corresponding to each piece of 2D information based on the obtained panoramic images from different angles.

**50.** The UAV of claim 49, wherein the 2D information is a pixel coordinates of feature points, the 3D information includes the 3D coordinates of each feature point and an attitude relationship between the panoramic images of different angles, and the pixel coordinates are represented by feature descriptors; and
the processor is configured to:

extract the feature descriptor of the corresponding feature point from each panoramic image; and
determine the 3D coordinates of each feature point and the attitude relationship between the panoramic images of different angles based on the feature descriptors of each panoramic image

**51.** The UAV of claim 50, wherein before the processor extracting the feature descriptor of the corresponding feature point from each panoramic image, the processor is further configured to:

receive the target to be tracked sent by a terminal device; and
determine a target box corresponding to the target in each panoramic image based on the received target.

**52.** The UAV of claim 51, wherein after the processor determining the ding box corresponding to the target in each panoramic image based on the received target, and before extracting the feature descriptor of the corresponding feature point from each panoramic image, the processor is further configured to:
perform a super-pixel segmentation processing on the target box corresponding to the target in each of the determined panoramic images to obtain a corresponding pixel block.

**53.** The UAV of claim 52, wherein after the processor performing the super-pixel segmentation processing on the target box corresponding to the target in each of the determined panoramic images to obtain the corresponding pixel block, the processor is further configured to:
adjust a boundary pixel of the pixel block corresponding to each panoramic image.

**54.** The UAV of claim 53, wherein the processor is configured to:
determine the boundary pixel as a part of the pixel block in response to a proportion of the boundary pixels in a pixel area of the corresponding target box being greater than or equal to a predetermined threshold.

**55.** The UAV of claim 52, wherein the processor is configured to:
use at least one of SLIC, graph-based, NCut, turbopixel, quick-shift, graph-cut a, and graph-cut b to perform the super-pixel segmentation processing on the target box corresponding to the target in each of the determined panoramic images.

**56.** The UAV of claim 52, wherein the processor is configured to:
use SIFT, SURF, or GLOH to obtain the feature descriptors of the feature points corresponding to each panoramic image from the pixel block corresponding to each panoramic image.

**57.** The UAV of claim 50, wherein the processor is configured to:

determine a transformation matrix between two adjacent panoramic images at a time of acquisition; and determine the 3D coordinates of the feature descriptors corresponding to a current panoramic image and the attitude relationship between the current panoramic image and the panoramic image at a next acquisition time based on the transformation matrix, the feature descriptor of the feature point corresponding to the current panoramic image, and the feature descriptor of the feature point corresponding to the panoramic image at the next acquisition time.

**58.** The UAV of claim 57, wherein the processor is configured to:

for each feature point, determine a target panoramic image associated with the feature point from all obtained panoramic images based on a feature point tracking algorithm;
determine a mapping relationship between a position of the feature point in two adjacent target panoramic images at the time of acquisition based on the feature descriptors of the feature point in the two adjacent panoramic images at the time of acquisition; and
determine the transformation matrix between the two adjacent panoramic images at the time of acquisition based on the mapping relationship of a plurality of feature points in the two adjacent target panoramic images.

**59.** The UAV of claim 58, wherein:
the feature point tracking algorithm is KLT.

**60.** The UAV of claim 58, the processor is configured to:
determine a linear mapping relationship between the position of the feature point in the two adjacent target panoramic images at the time of acquisition based on the feature descriptors of the feature point in the two adjacent target panoramic images at the time of acquisition.

**61.** The UAV of claim 58, after the processor determining the transformation matrix between a current second target panoramic image and the panoramic image at a last acquisition time based on the mapping relationship between the position of the feature point corresponding to the current second target panoramic image in the current second target panoramic image and the position of the feature point corresponding to the current second target panoramic image in the panoramic image at the last acquisition time, and before determining the 3D coordinates of the feature descriptors corresponding to the current panoramic image and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time, the processor is further configured to:
update the target box corresponding to the target in the current panoramic image based on the transformation matrix between the current panoramic image and the panoramic image at a last acquisition time.

**62.** The UAV of claim 61, wherein after the processor updating the target box corresponding to the target in the current panoramic image based on the transformation matrix between the current panoramic image and the panoramic image at the last acquisition time, and before determining the 3D coordinates of the feature descriptors corresponding to the current panoramic image and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time, the processor is further configured to:
use SIFT, SURF, or GLOH to extract new feature descriptors from the updated target box of the current panoramic image.

**63.** The UAV of claim 62, wherein the processor is configured to:
use a bundle adjustment algorithm to estimate the 3D coordinates of the feature points corresponding to the current panoramic image and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time.

64. The UAV of claim 63, wherein before the processing using the bundle adjustment algorithm to estimate the 3D coordinates of the feature points corresponding to the current panoramic image and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time, the processor is further configured to:

obtain the attitude relationship between adjacent panoramic images through a vision module and an inertial measurement unit (IMU) on the UAV, or a navigation system and the IMU on the UAV, or the visional module, the navigation system, and the IMU on the UAV;
the processor using the bundle adjustment algorithm to estimate the 3D coordinates of the feature points corresponding to the current panoramic image and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time includes:

use the attitude relationship as an initial value of the bundle adjustment; and
estimate the 3D coordinates of the feature points corresponding to the current panoramic image and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time.

65. The UAV of claim 48, before the processor adjusting the flight trajectory of the UAV and/or the imaging direction of the imaging module based on the real-time images, the 2D information of the target being at different angles, and the 3D information corresponding to each piece of 2D information, the processor is further configured to:
use SIFT, SURF, or GLOH to extract the feature descriptors of the feature points corresponding to the real-time image from the real-time image.

66. The UAV of claim 65, wherein the processor is configured to:

identify the 2D information of the feature point matching the feature point in the 3D model for each feature point in the real-time image;
determine a relative position of the feature point and a relative attitude of the real-time image based on the 3D information corresponding to the 2D information of the identified feature point matching the feature point;
adjust the flight trajectory of the UAV based on the relative position of each feature point; and
adjust the imaging direction of the imaging module based on the relative position of the real-time image such that the imaging direction of the imaging module is facing a specific position of the target.

67. The UAV of claim 66, wherein the processor is configured to:
identify the 2D information of a feature point closest to the feature point in the 3D model for each feature point in the real-time image.

68. The UAV of claim 67, wherein the processor is configured to:

determine the 2D information of the feature point closest to the feature point in the 3D model and the 3D information of a feature point second closet to the feature point in the 3D model for each feature point in the real-time image; and
determine whether the closest feature point matched by the feature point matches accurately based on a distance from the feature point to the closest feature point matched by the feature point, and a distance from the feature point to the second closest feature point matched by the feature point.

69. The UAV of claim 68, wherein the processor is configured to:
determine that the closest feature point matched by the feature point matches accurately when a ratio between the distance between feature point and the closest feature point matched by the feature point and the distance between the feature point and the second closest feature point matched by the feature point is greater than a ratio threshold.

**70.** The UAV of claim 66, wherein the processor is configured to:
using a PnP algorithm to determine the relative position of the feature point and the relative attitude of the real-time image based on the 3D information corresponding to the identified 2D information of the feature point matching the feature point.

**71.** The UAV of claim 48, wherein:
the processor includes one or more.

Build a 3D model of a target based on vision technology, the 3D model including 2D information of the target at different angles and 3D information corresponding to each piece of 2D information ⟋ S101

Control the UAV to move around the target ⟋ S102

Acquire real-time images captured by an imaging module on the UAV ⟋ S103

Adjust a flight trajectory of the UAV and/or an imaging direction of the imaging module based on the real-time images, the 2D information of the target at different angles, and the 3D information corresponding to each piece of 2D information ⟋ S104

**FIG. 1**

400

100

200

300

500

**FIG. 2**

Control the UAV to move around the target
with a radius greater than a certain distance
S301

Obtain panoramic images of different angles
acquired by the imaging module for the
target
S302

Obtain the 2D information of the target at
different angles and the 3D information
corresponding to each piece of 2D
information based on the acquired panoramic
images of different angles
S303

**FIG. 3**

**FIG. 4**

Determine a transformation matrix between two adjacent panoramic images at the time of acquisition based on the feature descriptors of the feature points corresponding to each panoramic image ⟍ S501

Determine the 3D coordinates of the feature point corresponding to the current panoramic image and the attitude relationship between the current panoramic image and the panoramic image at the next acquisition time based on the transformation matrix, the feature descriptor of the feature point corresponding to the current panoramic image, and the feature descriptor of the feature point corresponding to the panoramic image at the next acquisition time ⟍ S502

**FIG. 5**

Determine the target panoramic image associated with the feature point from all the acquired panoramic images for each feature point, based on a feature point tracking algorithm ⟍ S601

Determine a mapping relationship between the position of the feature point in two adjacent target panoramic images at the time of acquisition based on the feature descriptors of the two adjacent target panoramic images at the time of acquisition ⟍ S602

Determine the transformation matrix between the two adjacent panoramic images at the time of acquisition based on the mapping relationship between the positions of a plurality of feature points in the two adjacent panoramic images of the target ⟍ S603

**FIG. 6**

**FIG. 7**

| | | |
|---|---|---|
| Identify the 2D information of the feature point matching the feature point in the 3D model for each feature point in the real-time image | | S801 |
| Determine the relative position of the feature point and the relative attitude of the real-time image based on the 3D information corresponding to the identified feature point matching the feature point | | S802 |
| Adjust the flight trajectory of the UAV based on the relative position of each feature point | | S803 |
| Adjust the imaging direction of the imaging module based on the relative attitude of the real-time image, such that the imaging direction of the imaging module is facing the specific position of the target | | S804 |

**FIG. 8**

Imaging
Module — 300

Processor — 110

Storage Device — 120

Imaging
Device

**FIG. 9**

Processor — 110

Power
Assembly — 400

UAV

**FIG. 10**

## INTERNATIONAL SEARCH REPORT

| International application No. |
| --- |
| **PCT/CN2018/096180** |

**A. CLASSIFICATION OF SUBJECT MATTER**

G06T 3/00(2006.01)i; G06T 7/00(2017.01)i

According to International Patent Classification (IPC) or to both national classification and IPC

**B. FIELDS SEARCHED**

Minimum documentation searched (classification system followed by classification symbols)

G06T; H04N

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 无人机, 无人驾驶飞机, 无人飞机, 二维, 三维, 2D, 3D, 模型, 角度, 坐标, 座标, 特征, 描述子, 描述符, 跟踪, 拍摄, unmanned, aerial, vehicle, three, two, dimensional, feature, descriptor, angle, coordinate, track +, shoot+, shot+

**C. DOCUMENTS CONSIDERED TO BE RELEVANT**

| Category* | Citation of document, with indication, where appropriate, of the relevant passages | Relevant to claim No. |
| --- | --- | --- |
| Y | CN 106485736 A (SHENZHEN AUTEL INTELLIGENT AVIATION TECHNOLOGY CO., LTD.) 08 March 2017 (2017-03-08) <br> description, paragraphs [0045]-[0096] | 1-3, 24-26, 48-50 |
| Y | CN 106570820 A (ZHEJIANG UNIVERSITY OF TECHNOLOGY) 19 April 2017 (2017-04-19) <br> description, paragraphs [0004], [0005]-[0068] and [0072]-[0124] | 1-3, 24-26, 48-50 |
| A | CN 106506956 A (GOERTEK INC.) 15 March 2017 (2017-03-15) <br> entire document | 1-71 |
| A | CN 107124606 A (DONGGUAN MIAOYIN ADVERTISEMENT MEDIUM CO., LTD.) 01 September 2017 (2017-09-01) <br> entire document | 1-71 |
| A | CN 105136064 A (VCA INFORMATION TECHNOLOGY (WUXI) CO., LTD.) 09 December 2015 (2015-12-09) <br> entire document | 1-71 |
| A | CN 106296801 A (LENOVO (BEIJING) CO., LTD.) 04 January 2017 (2017-01-04) <br> entire document | 1-71 |

☑ Further documents are listed in the continuation of Box C.     ☑ See patent family annex.

| | |
| --- | --- |
| \* Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **22 February 2019** | **27 March 2019** |

| Name and mailing address of the ISA/CN | Authorized officer |
| --- | --- |
| **State Intellectual Property Office of the P. R. China** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2018/096180** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 205263655 U (YU, JIANG) 25 May 2016 (2016-05-25)<br>        entire document | 1-71 |
| A | JP 09322048 A (JAPAN BROADCASTING CORP. ET AL.) 12 December 1997 (1997-12-12)<br>        entire document | 1-71 |
| A | EP 2849150 A1 (THOMSON LICENSING) 18 March 2015 (2015-03-18)<br>        entire document | 1-71 |
| A | US 2010322479 A1 (LC TECHNOLOGIES INC.) 23 December 2010 (2010-12-23)<br>        entire document | 1-71 |

Form PCT/ISA/210 (second sheet) (January 2015)

INTERNATIONAL SEARCH REPORT
Information on patent family members

International application No.

**PCT/CN2018/096180**

| Patent document cited in search report | | | Publication date (day/month/year) | Patent family member(s) | | | Publication date (day/month/year) |
|---|---|---|---|---|---|---|---|
| CN | 106485736 | A | 08 March 2017 | WO | 2018077050 | A1 | 03 May 2018 |
| CN | 106570820 | A | 19 April 2017 | None | | | |
| CN | 106506956 | A | 15 March 2017 | None | | | |
| CN | 107124606 | A | 01 September 2017 | None | | | |
| CN | 105136064 | A | 09 December 2015 | None | | | |
| CN | 106296801 | A | 04 January 2017 | None | | | |
| CN | 205263655 | U | 25 May 2016 | None | | | |
| JP | 09322048 | A | 12 December 1997 | JP | H09322048 | A | 12 December 1997 |
| | | | | JP | 3549332 | B2 | 04 August 2004 |
| EP | 2849150 | A1 | 18 March 2015 | WO | 2015039911 | A1 | 26 March 2015 |
| US | 2010322479 | A1 | 23 December 2010 | US | 8320623 | B2 | 27 November 2012 |
| | | | | US | 2018160035 | A1 | 07 June 2018 |
| | | | | US | 2017099433 | A1 | 06 April 2017 |
| | | | | US | 2014092268 | A1 | 03 April 2014 |
| | | | | US | 2010321482 | A1 | 23 December 2010 |
| | | | | US | 2016165130 | A1 | 09 June 2016 |

Form PCT/ISA/210 (patent family annex) (January 2015)